# FASCICULE DE BREVET EUROPEEN

(11) **EP 2 675 651 B1**
(45) Date de publication et mention de la délivrance du brevet: **21.09.2016**
(21) Numéro de dépôt: 12708919.1
(22) Date de dépôt: 14.02.2012
(51) Int. Cl.: B60L 7/26, B60L 7/18

(54) **SYSTEME ET PROCEDE DE FREINAGE D'UN VEHICULE A TRACTION ELECTRIQUE OU HYBRIDE**
SYSTEM UND VERFAHREN ZUM BREMSEN EINES HYBRID- ODER ELEKTRISCHEN TRIEBFAHRZEUGS
SYSTEM AND METHOD FOR BRAKING A HYBRID OR ELECTRIC TRACTION VEHICLE

(30) Priorité: 14.02.2011 FR 1151185
(43) Date de publication de la demande: 25.12.2013
(73) Titulaire: Renault S.A.S., 92100 Boulogne-Billancourt (FR)
(72) Inventeur: AZZI, Hamid, F-78310 Maurepas (FR)
(86) Numéro de dépôt international: PCT/FR2012/050316
(87) Numéro de publication internationale: WO 2012/110736

(56) Documents cités:
- EP-A1- 1 327 556
- JP-A- 2001 008 306
- US-A1- 2007 228 821
- US-A1- 2010 036 577

## Description

L'invention concerne les véhicules automobiles à traction électrique ou hybride et plus précisément les systèmes de freinage de ces véhicules, en particulier les systèmes de freinage permettant la récupération d'énergie électrique.

Les systèmes de récupération d'énergie électrique permettent, lors de phases de freinage, d'utiliser le moteur électrique du véhicule afin d'effectuer une décélération, tout en alimentant les batteries du véhicule pour en améliorer l'autonomie.

A cet effet, des modules de pédale de freinage découplée sont utilisés de manière à dissocier l'action du conducteur sur la pédale de frein et la décélération réellement réalisée. Dans un tel module de freinage découplé, il n'existe pas de lien mécanique direct entre la pédale de frein et les modules de freinage, et l'on peut utiliser un module de freinage électrique ou de manière classique un module de freinage hydraulique afin d'effectuer la décélération voulue par le conducteur.

Le système de freinage du véhicule fournit alors des consignes au module de freinage électrique et au module de freinage hydraulique pour effectuer la décélération désirée par le conducteur tout en améliorant l'autonomie du véhicule.

En outre, les systèmes de freinage doivent permettre de conserver la stabilité du véhicule et le confort des utilisateurs, par exemple en limitant le tangage et les à-coups. Or, les systèmes actuels de freinage permettant la récupération d'énergie électrique peuvent, notamment dans certains cas de fonctionnement, fournir des consignes provoquant des basculements entre le module de freinage électrique et le module de freinage hydraulique.

Ces basculements peuvent être dangereux, étant donné que dans des situations de freinage d'urgence, le freinage le plus efficace est à utiliser en priorité, à savoir le freinage hydraulique. Les situations de freinage d'urgence sont par exemple celles dans lesquelles le conducteur doit freiner pour éviter un obstacle imprévu, ou encore celles dans lesquelles le module de freinage électrique est défaillant.

Afin d'éviter un obstacle imprévu, le conducteur appuie sur la pédale de frein suffisamment rapidement pour éviter l'obstacle. Ainsi, la vitesse d'enfoncement de la pédale lors d'une telle situation est plus élevée que lors d'une situation de freinage classique. Lorsque le module de freinage électrique est défaillant, l'utilisateur peut appuyer à plusieurs reprises sur la pédale, et ce plus rapidement que lors d'une situation de freinage classique.

Ainsi, lors des situations de freinage d'urgence, la pédale de frein est enfoncée plus rapidement et sous une pression plus forte que lors d'une situation de freinage classique.

On pourra se référer à la demande de brevet européen EP 2055589 qui décrit un procédé de récupération d'énergie qui ne prend pas en compte la vitesse d'enfoncement de la pédale ou la variation de la pression appliquée sur la pédale. Il est toutefois connu, par le document JP 2001 008306, de mesurer un paramètre lié à la pédale de frein et des moyens de limitation de la récupération d'énergie électrique par le module de freinage électrique. Il a également été proposé, dans la demande de brevet américain US 20050200197 de calculer le couple de freinage, et ce dans un système fonctionnant en boucle ouverte et en utilisant des courbes prédéfinies. On pourra également se référer au brevet américain US 6155365 qui décrit un procédé de contrôle de freinage au sein d'un véhicule électrique ou hybride, mais qui ne prévoit pas la détection de situations d'urgence. Enfin, il a été proposé dans la demande de brevet américain US 20060220453, un système de freinage comprenant un module de limitation du freinage régénératif uniquement afin d'éviter des situations de blocage des roues. Les systèmes de freinage décrits dans ces documents ont donc pour inconvénient de ne pas limiter la récupération d'énergie électrique lors de situations de freinage d'urgence dans lesquelles le conducteur appuie par exemple rapidement sur la pédale de frein.

L'invention a pour but d'améliorer la répartition du freinage électrique et du freinage hydraulique au sein d'un véhicule automobile à traction électrique ou hybride, en particulier lors de situations de freinage d'urgence.

Selon un aspect, il est proposé un système de freinage pour un véhicule automobile équipé d'un système de traction électrique ou hybride, et comportant un module de pédale de freinage découplée, un module de freinage hydraulique, un module de freinage électrique utilisé pour la récupération d'énergie électrique lors d'un freinage effectué par le système de traction électrique, ledit module de freinage découplé comprenant une pédale de frein et des moyens de commande du système de freinage hydraulique et du module de freinage électrique.

Le système comprend des moyens de mesure d'au moins un paramètre lié à ladite pédale, et des moyens de limitation de la récupération d'énergie électrique par le module de freinage électrique.

Ce paramètre lié à la pédale permet notamment de détecter les situations de freinage d'urgence. Ainsi, la limitation de la régénération d'énergie permet de réaliser le freinage en utilisant préférentiellement le module de freinage hydraulique lors de ces situations d'urgence. La sécurité lors du freinage est ainsi améliorée.

Avantageusement, le système de freinage comprend des moyens de mémorisation de la valeur maximale du paramètre lié à la pédale de freinage pendant une phase de freinage.

Cette valeur maximale permet de déterminer si lors d'une phase de freinage, l'utilisateur a par exemple modifié rapidement un paramètre de ladite pédale et ainsi déterminer si cette phase de freinage est une phase de freinage d'urgence. On appelle « phase de freinage », la phase pendant laquelle l'utilisateur désire effectuer une décélération. Cette phase peut comprendre un ou plusieurs appuis successifs sur la pédale, et se termine lors d'un relâchement de la pédale, éventuellement après un temps d'attente déterminé préalablement.

Ainsi, on peut limiter la récupération d'énergie en fonction de la valeur maximale dudit paramètre lors d'une phase de freinage.

Le paramètre lié à la pédale de freinage peut comprendre la vitesse d'enfoncement de la pédale et/ou la dérivée de la pression appliquée sur ladite pédale.

La vitesse de la pédale et la variation de la pression appliquée sont des paramètres particulièrement avantageux pour détecter les situations d'urgence. En outre, la vitesse ainsi que la pression appliquée sur la pédale permettent d'élaborer une consigne de couple de freinage du véhicule. La consigne de couple de freinage du véhicule est la décélération à effectuer voulue par le conducteur.

Selon un autre aspect, il est proposé un procédé de freinage d'un véhicule automobile équipé d'un système de traction électrique ou hybride avec récupération d'énergie utilisant un module de pédale de freinage découplée, dans lequel, pendant une phase de freinage, on limite la récupération d'énergie en fonction d'au moins un paramètre lié à ladite pédale.

Avantageusement, on mémorise la valeur maximale dudit paramètre pendant une phase de freinage. On peut ainsi limiter la récupération d'énergie en fonction de cette valeur maximale.

On peut mémoriser la valeur maximale dudit paramètre pendant une phase de freinage comprenant une pluralité d'appuis sur la pédale.

En outre, on ne limite pas la récupération d'énergie si ladite valeur maximale dudit paramètre est inférieure à une première valeur de seuil.

Si la valeur maximale est inférieure à cette valeur de seuil, alors la phase de freinage n'est pas une phase de freinage d'urgence.

On peut limiter partiellement la récupération d'énergie si ladite valeur maximale dudit paramètre est supérieure à ladite première valeur de seuil et inférieure à une deuxième valeur de seuil.

On peut également supprimer toute récupération d'énergie si ladite valeur maximale dudit paramètre est supérieure à ladite deuxième valeur de seuil.

Avantageusement, ledit paramètre comprend la vitesse d'enfoncement de la pédale et/ou la dérivée de la pression appliquée sur ladite pédale.

D'autres avantages et caractéristiques de l'invention apparaîtront à l'étude de la description suivante, prise à titre d'exemple non limitatif et illustrée par les dessins annexés sur lesquels:
- la figure 1 illustre un système de freinage selon un aspect de l'invention,
- les figures 2 et 3 illustrent schématiquement différents modules de limitation de la récupération d'énergie, et
- la figure 4 illustre la limitation de la récupération d'énergie selon un aspect de l'invention.

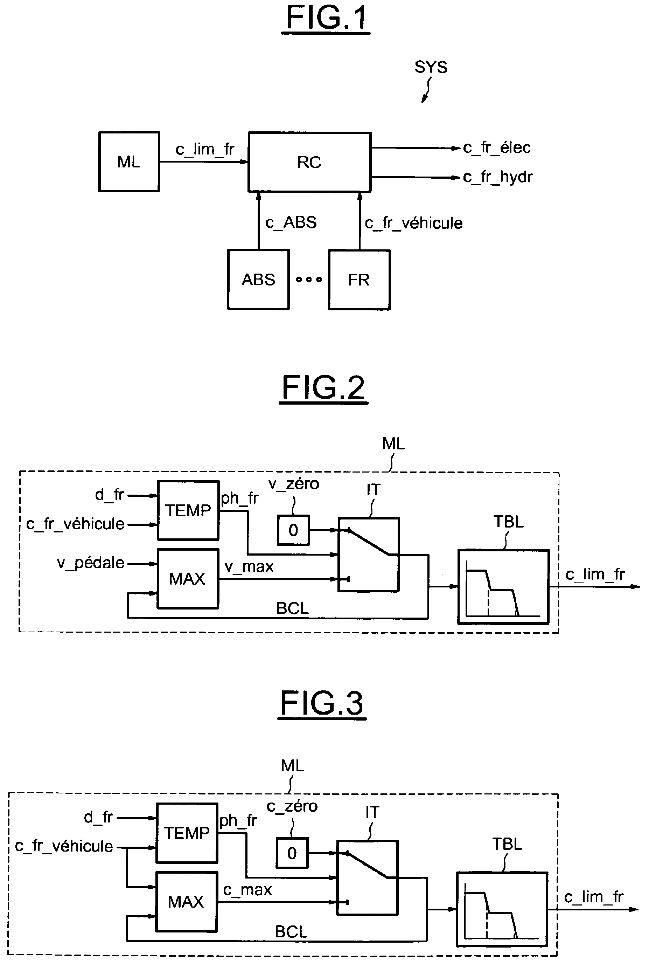

Sur la figure 1, on a représenté un système de freinage SYS embarqué au sein d'un véhicule automobile à traction électrique ou hybride.

Ce système comprend un module de limitation de la récupération d'énergie ML, par exemple un module de limitation en fonction de la vitesse d'enfoncement de la pédale de freinage, ou un module de limitation en fonction de la dérivée de la pression appliquée sur la pédale, ou encore un module de limitation en fonction de la consigne de couple de freinage du véhicule.

Le module ML élabore une consigne de limitation du freinage électrique c_lim_fr destinée à un organe répartiteur de couple RC.

L'organe répartiteur de couple RC reçoit en outre des consignes parmi lesquelles la consigne de couple de freinage du véhicule c_fr_véhicule élaborée par l'action du conducteur sur la pédale dans le module de pédale de freinage découplée FR, ou encore une consigne c_ABS élaborée par un organe d'antiblocage de sécurité.

L'organe répartiteur de couple RC peut en outre recevoir une pluralité de consignes qui n'ont pas été représentées ici pour des raisons de simplicité.

Deux consignes sont élaborées par l'organe répartiteur de couple RC. Une consigne de freinage électrique c_fr_élec est élaborée par l'organe répartiteur de couple RC, et limitée au moins par la consigne c_lim_fr. Une consigne de freinage hydraulique c_fr_hydr est également élaborée par l'organe répartiteur de couple RC.

On notera que la consigne de freinage électrique c_fr_élec peut être limitée par d'autres consignes que la consigne c_lim_fr. A titre d'exemple, la consigne c_ABS limite de manière classique la récupération d'énergie.

L'organe répartiteur de couple RC représenté ici permet de limiter le freinage électrique et d'utiliser le freinage hydraulique, lors de situations de freinage d'urgence.

Sur la figure 2, on a représenté un module de limitation ML de la récupération d'énergie, par exemple disposé au sein d'un véhicule automobile à traction électrique ou hybride.

Un premier organe MAX est destiné à mesurer et mémoriser la valeur maximale d'un paramètre lié à une pédale de frein d'un module de freinage découplé du véhicule automobile.

Dans le mode de réalisation de la figure 1, la vitesse d'enfoncement de la pédale v_pédale est fournie à l'organe MAX destiné à mesurer et mémoriser la vitesse maximale v_max. L'organe MAX est connecté à un interrupteur IT de manière à fournir à cet interrupteur la valeur maximale de la vitesse v_max.

Le module ML est également équipé d'un module de temporisation TEMP apte à recevoir sur une première entrée, une variable relative à la durée de la phase de freinage d_fr et sur une seconde entrée, une consigne de couple de freinage du véhicule c_fr_véhicule. La consigne de couple de freinage du véhicule correspond à la décélération voulue par le conducteur lorsqu'il enfonce la pédale. Une fois la pédale de freinage relâchée, on considère que la phase de freinage commencée lors d'un enfoncement de la pédale n'est pas terminée pendant une durée fixée au préalable, la durée d_fr. Une phase de freinage peut ainsi comprendre plusieurs appuis successifs, séparés respectivement d'une durée inférieure à la durée d_fr. A titre d'exemple, la durée d_fr peut être de l'ordre de cinq secondes.

Le module de temporisation TEMP fournit un signal ph_fr indiquant à l'interrupteur IT qu'une phase de freinage est en cours.

Le module de temporisation est particulièrement utile pour les situations dans lesquelles le freinage électrique est défaillant. Dans cette situation, l'utilisateur appuiera successivement plusieurs fois sur la pédale, et l'organe MAX mémorisera la valeur maximale de la vitesse d'enfoncement de la pédale pour l'ensemble des appuis sur la pédale.

L'interrupteur IT comporte également une entrée destinée à recevoir une valeur v_zéro correspondant à une vitesse d'enfoncement de la pédale nulle.

L'interrupteur IT connecte, en fonction du signal ph_fr, la valeur maximale de la vitesse d'enfoncement de la pédale v_max (pendant une phase de freinage), ou la vitesse nulle v_zéro, à sa sortie reliée à une table TBL.

La sortie de l'interrupteur IT est également reliée à l'organe MAX au moyen d'une boucle de retour BCL. La boucle BCL permet par exemple de réinitialiser la valeur v_max en vue d'une phase de freinage ultérieure.

La table TBL permet d'établir une consigne de limitation de freinage électrique c_lim_fr, soit une consigne de limitation de la récupération d'énergie, en fonction de la vitesse maximale v_max (lors d'une phase de freinage). Cette table peut comprendre des moyens de comparaison de la vitesse maximale à une pluralité de seuils mémorisés de manière à établir ladite consigne c_lim_fr.

On notera que le module ML peut fonctionner avec une entrée pour la dérivée de la pression appliquée sur la pédale remplaçant la vitesse d'enfoncement de la pédale. L'organe MAX reçoit alors la dérivée de la pression appliquée sur la pédale et fournit à l'interrupteur IT la valeur maximale de la dérivée de la pression appliquée sur la pédale.

Il est également possible d'utiliser la consigne de couple de freinage véhicule c_fr_véhicule, comme illustré dans le mode de réalisation de la figure 3, pour le module de limitation ML.

Ainsi, cette consigne de couple c_fr_véhicule, élaborée au moyen de la vitesse de la pédale et de la pression appliquée sur la pédale, permet, avec sa valeur maximale c_max, d'élaborer une consigne de limitation c_lim_fr lors d'une phase de freinage. En dehors d'une phase de freinage, la valeur de consigne nulle c_zéro est fournie à la table TBL par l'interrupteur IT.

Dans ce mode de réalisation, la consigne de couple de freinage du véhicule est fournie au module de temporisation TEMP ainsi qu'à l'organe MAX. Cette consigne c_fr_véhicule unique permet de détecter les phases de freinage ainsi que les situations d'urgence.

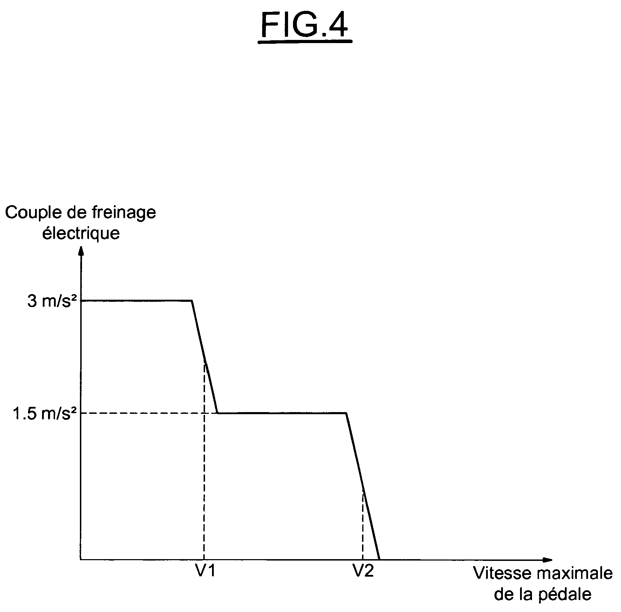

Sur la figure 4, on a représenté graphiquement l'évolution du couple de freinage électrique maximum, en fonction de la vitesse maximale de la pédale de frein au cours d'une phase de freinage.

Le couple de freinage électrique est limité par la consigne de limitation c_lim_fr en fonction ici de la vitesse maximale de la pédale de frein.

Lorsque la valeur maximale de la vitesse de la pédale de frein est inférieure à un premier seuil de vitesse V1, le couple de freinage électrique n'est pas limité, et peut atteindre une décélération maximale de l'ordre de 3m/s². Cette situation n'est pas une situation de freinage d'urgence. La récupération d'énergie n'est donc pas limitée par le module ML. On notera que la récupération d'énergie peut être limitée par d'autres modules du véhicule.

Lorsque la valeur maximale de la vitesse de la pédale de frein est supérieure au premier seuil de vitesse V1, et inférieure à un deuxième seuil de vitesse V2, le couple de freinage électrique est partiellement limité, par exemple, à une valeur de l'ordre de 1,5m/s². Ainsi, on obtient une limitation intermédiaire, correspondant aux situations de freinage d'urgence ne présentant pas un risque immédiat. Le freinage sera effectué partiellement par freinage électrique et par freinage hydraulique.

Pour toute valeur supérieure au deuxième seuil de vitesse V2, le couple de freinage électrique est totalement limité et sa valeur devient nulle. En d'autres termes, la récupération d'énergie est totalement limitée quand la vitesse maximale de la pédale est supérieure au seuil V2. Au-delà du seuil de vitesse V2, on considère que l'on est en situation de freinage d'urgence, par exemple une situation dans laquelle le conducteur doit éviter un obstacle imprévu.

Lorsque le couple de freinage électrique est nul, en fonction de la consigne de couple de freinage du véhicule c_fr_véhicule, une consigne de couple de freinage hydraulique peut être élaborée de manière à effectuer la décélération voulue par le conducteur.

Les valeurs des seuils V1 et V2 sont avantageusement stockées dans la table TBL de manière à élaborer la consigne de limitation c_lim_fr. Ces valeurs sont fixées préalablement, par exemple après une étape de calibration dans laquelle on mesure les vitesses d'enfoncement de la pédale dans différentes situations.

On notera par ailleurs qu'une représentation graphique similaire peut être obtenue en fonction de la valeur maximale de la dérivée de la pression appliquée sur la pédale ou de la valeur maximale de la consigne de couple de freinage véhicule c_max.

Grâce à l'invention, on obtient une amélioration de la répartition du freinage électrique et du freinage hydraulique, en particulier lors de situations de freinage d'urgence.

On obtient également une limitation des basculements entre freinage hydraulique et freinage électrique. Dans les situations de freinage d'urgence, le freinage électrique est préférentiellement remplacé par le freinage hydraulique.

## Revendications

1. Système de freinage pour véhicule automobile équipé d'un système de traction électrique ou hybride, et comportant un module de pédale de freinage découplée, un module de freinage hydraulique, un module de freinage électrique utilisé pour la récupération d'énergie électrique lors d'un freinage effectué par le système de traction électrique, ledit module de freinage découplé comprenant une pédale de frein et des moyens de commande du système de freinage hydraulique et du module de freinage électrique (RC), le système comprenant des moyens de mesure d'au moins un paramètre lié à ladite pédale, et des moyens de limitation (ML) de la récupération d'énergie électrique par le module de freinage électrique, **caractérisé en ce que** le système comprend des moyens de limitation partielle de la récupération d'énergie si la valeur maximale dudit paramètre est supérieure à une première valeur de seuil (V1) et inférieure à une deuxième valeur de seuil (V2).

2. Système selon la revendication 1, **caractérisé en ce qu'**il comprend des moyens (MAX) de mémorisation de la valeur maximale dudit paramètre pendant une phase de freinage.

3. Système selon la revendication 1 ou 2, **caractérisé en ce que** ledit paramètre comprend la vitesse d'enfoncement de la pédale (v_pédale) et/ou la dérivée de la pression appliquée sur ladite pédale.

4. Procédé de freinage d'un véhicule automobile équipé d'un système de traction électrique ou hybride avec récupération d'énergie électrique utilisant un module de pédale de freinage découplée, dans lequel, pendant une phase de freinage, on limite la récupération d'énergie en fonction d'au moins un paramètre lié à ladite pédale, et on limite partiellement la récupération d'énergie si la valeur maximale dudit paramètre est supérieure à une première valeur de seuil et inférieure à une deuxième valeur de seuil.

5. Procédé selon la revendication 4, dans lequel on mémorise la valeur maximale dudit paramètre pendant une phase de freinage.

6. Procédé selon la revendication 5, dans lequel on mémorise la valeur maximale dudit paramètre pendant une phase de freinage comprenant une pluralité d'appuis sur la pédale.

7. Procédé selon la revendication 5 ou 6, dans lequel on ne limite pas la récupération d'énergie si ladite valeur maximale dudit paramètre est inférieure à une première valeur de seuil (V1).

8. Procédé selon la revendication 4, dans lequel on supprime toute récupération d'énergie si ladite valeur maximale dudit paramètre est supérieure à ladite deuxième valeur de seuil (V2).

9. Procédé selon l'une quelconque des revendications 4 à 8, dans lequel ledit paramètre comprend la vitesse d'enfoncement de la pédale (v_pédale) et/ou la dérivée de la pression appliquée sur ladite pédale.

## Patentansprüche

1. Bremssystem für Kraftfahrzeug, das mit einem elektrischen Traktionssystem oder einem Hybrid-Traktionssystem ausgerüstet ist und ein entkoppeltes Bremspedal-Modul, ein hydraulisches Bremsmodul und ein elektrisches Bremsmodul, das für die Wiedergewinnung elektrischer Energie bei einem durch das elektrische Traktionssystem ausgeführten Bremsen verwendet wird, umfasst, wobei das entkoppelte Bremsmodul ein Bremspedal und Mittel zum Steuern des hydraulischen Bremssystems und des elektrischen Bremssystems (RC) enthält, wobei das System Mittel zum Messen wenigstens eines mit dem Pedal in Beziehung stehenden Parameters und Mittel (ML) zum Begrenzen der Wiedergewinnung elektrischer Energie durch das elektrische Bremsmodul umfasst, **dadurch gekennzeichnet, dass** das System Mittel zum teilweisen Begrenzen der Energiewiedergewinnung, falls der Maximalwert des Parameters größer als ein erster Schwellenwert (V1) und kleiner als ein zweiter Schwellenwert (V2) ist, umfasst.

2. System nach Anspruch 1, **dadurch gekennzeichnet, dass** es Mittel (MAX) zum Speichern des Maximalwerts des Parameters während einer Bremsphase umfasst.

3. System nach Anspruch 1 oder 2, **dadurch gekennzeichnet, dass** der Parameter die Niederdrückungsgeschwindigkeit des Pedals (v_pedal) und/oder die Ableitung des auf das Pedal ausgeübten Drucks umfasst.

4. Verfahren zum Bremsen eines Kraftfahrzeugs, das mit einem elektrischen Traktionssystem oder mit einem Hybrid-Traktionssystem mit Wiedergewinnung elektrischer Energie unter Verwendung eines entkoppelten Bremspedal-Moduls ausgerüstet ist, wobei während einer Bremsphase die Wiedergewinnung von Energie als Funktion wenigstens eines Parameters, der mit dem Pedal in Beziehung steht, begrenzt wird und die Wiedergewinnung von Energie teilweise begrenzt wird, falls der Maximalwert des Parameters größer als ein erster Schwellenwert und kleiner als ein zweiter Schwellenwert ist.

5. Verfahren nach Anspruch 4, wobei der Maximalwert des Parameters während einer Bremsphase gespeichert wird.

6. Verfahren nach Anspruch 5, wobei der Maximalwert des Parameters während einer Bremsphase, die mehrere Pedaltretvorgänge enthält, gespeichert wird.

7. Verfahren nach Anspruch 5 oder 6, wobei die Wiedergewinnung von Energie nicht begrenzt wird, falls der Maximalwert des Parameters kleiner als ein erster Schwellenwert (V1) ist.

8. Verfahren nach Anspruch 4, wobei jegliche Wiedergewinnung von Energie unterdrückt wird, falls der Maximalwert des Parameters größer als der zweite Schwellenwert (V2) ist.

9. Verfahren nach einem der Ansprüche 4 bis 8, wobei der Parameter die Niederdrückungsgeschwindigkeit des Pedals (v_pedal) und/oder die Ableitung des auf das Pedal ausgeübten Drucks umfasst.

## Claims

1. System for braking a motor vehicle fitted with a hybrid or electric traction system, and including a decoupled brake pedal module, a hydraulic braking module, and an electric braking module used for recovering electrical energy during braking carried out by the electric traction system, said decoupled braking module comprising a brake pedal and means for controlling the hydraulic braking system and the electric braking module (RC), the system comprising means for measuring at least one parameter associated with said pedal, and means (ML) for limiting the recovery of electrical energy by the electric braking module, **characterized in that** the system comprises means for partially limiting the energy recovery if the maximum value of said parameter is greater than a first threshold value (V1) and below a second threshold value (V2).

2. System according to Claim 1, **characterized in that** it comprises means (MAX) for storing the maximum value of said parameter during a braking phase.

3. System according to Claim 1 or 2, **characterized in that** said parameter comprises the speed of depression of the pedal (v_pédale) and/or the derivative of the pressure applied to said pedal.

4. Method for braking a motor vehicle fitted with a hybrid or electric traction system with electrical energy recovery using a decoupled brake pedal module, in which, during a braking phase, the energy recovery is limited as a function of at least one parameter associated with said pedal, and the energy recovery is partially limited if the maximum value of said parameter is greater than a first threshold value and below a second threshold value.

5. Method according to Claim 4, wherein the maximum value of said parameter is stored during a braking phase.

6. Method according to Claim 5, wherein the maximum value of said parameter is stored during a braking phase comprising a plurality of depressions of the pedal.

7. Method according to Claim 5 or 6, wherein the energy recovery is not limited if said maximum value of said parameter is below a first threshold value (V1).

8. Method according to Claim 4, wherein all energy recovery is prevented if said maximum value of said parameter is greater than said second threshold value (V2).

9. Method according to any one of Claims 4 to 8, wherein said parameter comprises the speed of depression of the pedal (v_pédale) and/or the derivative of the pressure applied to said pedal.
